# EUROPEAN PATENT SPECIFICATION

(11) **EP 1 705 984 B1**
(45) Date of publication and mention of the grant of the patent: **13.08.2008**
(21) Application number: 05701857.4
(22) Date of filing: 13.01.2005
(51) Int. Cl.: A01K 27/00, A01K 25/00

(54) **RESTRAINT DEVICE FOR ANIMALS**
RÜCKHALTEVORRICHTUNG FÜR TIERE
DISPOSITIF DE RETENUE POUR ANIMAUX

(30) Priority: 14.01.2004 GB 0400786; 19.07.2004 GB 0416096
(43) Date of publication of application: 04.10.2006
(73) Proprietor: The Canny Company Limited, Nantwich Cheshire CW5 7BX (GB)
(72) Inventor: McELHERRON, Sean, Nantwich, Cheshire CW5 7BX (GB)
(74) Representative: Moore, Christopher Mark
(86) International application number: PCT/GB2005/000088
(87) International publication number: WO 2005/067705

(56) References cited:
- GB-A- 2 385 506
- US-A1- 2002 117 121

## Description

The invention relates to a restraint device for animals and in particular, but not exclusively, to a device for dogs incorporating means for restraining the dog from pulling and, preferably, biting or barking.

Our British patent application published under no. GB 2385506 entitled "A Dog Collar" discloses a restraint which comprises a slip line which extends through four D-rings mounted on a collar. The slip line also extends through a figure-of-eight ring arranged to be located below the dog's muzzle, the slip line being able to encircle the dog's muzzle to thereby provide a 'controlling' action, in use.

One potential drawback which has been noted with our above-identified patent application is that when the dog is taken off the lead, it is necessary to remove the restraint because the slip line encircling the dog's muzzle can be 'pawed off' and then trails from the neck of the animal, providing a potential choke hazard for the animal and/or a trip-hazard for others or a risk of damage to property.

It is thought that all other similar 'headcollar' type training devices and restraints must be removed from the animal once the animal has been taken off the lead. Reference is made to GB 2215973, EP 0199477 and US 4964369 which must all be removed subsequent to use, or else provide the potential for damage to property or to the animal through trailing or loose parts.

It is clear that there is a potential benefit in not having to remove the collar each time that an animal is taken off of the lead. This will be particularly felt when there are a large number of animals to be walked, for example, in an animal shelter, although the benefit will also be felt with an individual animal.

US 5325819 discloses a dog harness which comprises a neck collar and a lead which extends around the dog's forelegs. The lead is retained on the collar and extends through a guide. The ends of the lead have fasteners which are secured together and to which a leash is secured thereto. When a leash is not secured thereto the fasteners may still be secured together. However this often means that the lead is slack or loose on the animal, thereby providing a 'snag' risk for the dog and the potential for damage to property.

Accordingly, it is an object of this invention to provide a restraint which has all the benefits of our earlier patent application but which need not be removed from the animal once the animal has been removed from the lead. It is a non-exclusively further object to provide a restraint which does not comprise materials which will cause a reaction, e.g. a skin reaction, to the restrained animal, and/or in which fur or hair can be caught.

The invention provides an animal restraint device comprising a collar arranged to be secured about the animal's neck and lead means retained on the collar and having a portion arranged to encompass the animal's muzzle, in use; said lead means having two ends to which a leash is securable, characterised in that said lead means comprises securing means at or towards either end thereof for securing the ends of said lead means together or to the collar when not secured to a leash to leave little or none of said lead means dangling from the collar.

Preferably, a surface of the collar includes longitudinally spaced apart lead guide means mounted on either side of the longitudinal centre of the collar; the lead means comprising a lead which passes through said lead guide means and includes stop means at each end to which the leash is attachable; slider means mounted on the lead, located between said guide means and arranged to allow a portion of the lead to assume a generally noose-like shape to encompass the nose and mouth region of the animal, wherein the securing means are positioned at or towards either end of the lead means and are arranged to be secured or secureable together or secured or secureable to said guide means once the leash has been removed from said stop means to leave little or none of the lead dangling from the collar.

Preferably, said guide means are arranged as two outer guide means which are engagable with said stop means and two inner guide means which are located one on each side of the longitudinal centre of the collar, said securing means preferably being secureable to said inner guide means and/or to one another and/or to the collar.

Preferably, the lead is longer than the collar, in the range of for example, from about 2.5 to 1.5 times the length.

Preferably, said securing means comprise sprung clips, say sprung metal or plastics clips. Said securing means may comprise mutually engagable hook-and-eye fasteners. Said securing means may comprise fabric mutually engagable hook-and-eye fixings (e.g. Velcro^{®}) which may be secured (*e.g*. sewn) to the ends of the lead.

By the term 'engaged collar' we mean the length of the collar when the two ends are engaged, e.g. a female clasp engages an eyelet at a male end of the collar appropriate to the animal.

By the term slider means we mean a device which guides and allows relatively free movement of the lead under the nose and mouth region (e.g. the muzzle) of the animal, for example a pair of friction surfaces against which said lead means bears and which friction surfaces allow the free, or at least substantially unimpeded, passage of said lead means- It is a preferred feature of the invention that the slider means (and any other part likely to contact, e.g. be in extended contact with the skin of the animal during use) the fur or skin of the animal) is made of a material which will not cause an allergic reaction in the animal; the use of certain metals e.g. nickel is preferably avoided. Preferably, the slider is a so called TRIGLIDE (PL 103) which has two sockets and is formed of plastics such as an acetal (polyoxymethylene or polyformaldehyde).

Preferably, the stop means at the ends of the lead define or provide means for engagement with a leash.

In order that the invention may be well understood it will now be described by way of example only with reference to the accompanying diagrammatic drawings in which:
Figure 1 is a plan view of the parts of a restraint device according to the invention before use;
Figure 2 is a plan view of the restraint device of Figure 1, showing the parts together, ready for use;
Figure 3 is a perspective view of the device of Figure 1 configured for non-restraint use; and
Figure 4 is a perspective view of the device of Figure 1 configured for a second embodiment of non-restraint use.

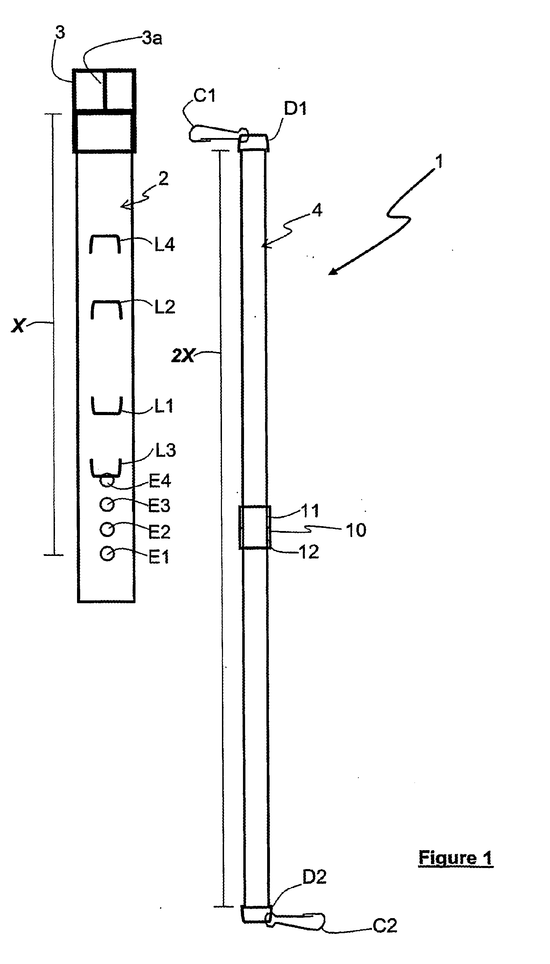

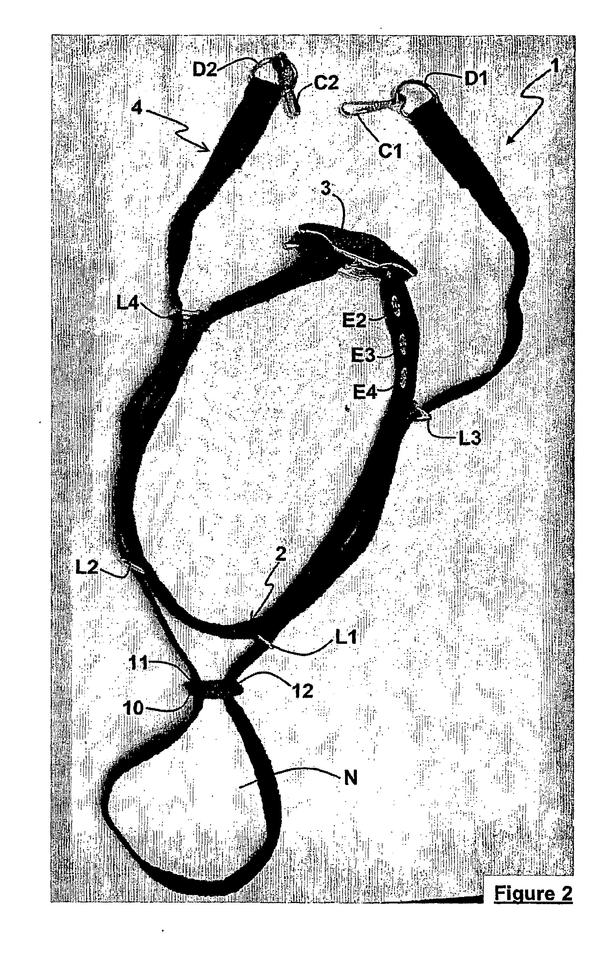

Referring to Figures 1 and 2, the device 1 comprises a collar 2 which is a length of strong textile material or webbing or leather having at one end a metal buckle or clasp 3 and at the other, four eyelet protected holes E1 to E4, which can receive the pin 3a of the buckle 3. The collar 2 is intended to be placed about the neck of an animal such as a dog. The eyelets are preferably reinforced by a metal which is not hazardous to the animal e.g. nickel is preferably avoided.

Two pairs of loops are fixed to a surface of the collar 1, e.g. by stitching to act as lead guide means. The inner pair L1, L2 are located about 2.54 cm apart on each side of the longitudinal centre of the collar 2. The outer pair of loops L3, L4 are spaced an equal distance away from the longitudinal centre of the collar 2. The loops act as lead guide means for a lead or strap 4 which, in use, runs through each of the loops L1-L4. The loops L1 to L4 are made of a metal which will not cause an allergic reaction. The lead 4 is narrower than the collar 2 and is also made of strong textile material or webbing.

At each end the lead 4 has a metal D-ring D1, D2 each dimensioned so that it cannot pass through the loop L3, L4 respectively. In this way, the lead 4 is held to the collar 2. The length of the lead 4 is selected so that the distance *X* between eyelet E1 and the end of the collar 2 at the buckle end of the collar is half the length 2*X* of the webbing of the lead 4. A slider 10 is present at about the longitudinal midpoint of the strap, that is, in use, between the loops L1, L2. The slider 10 is a figure-of-eight provided with two passages at sockets 11, 12 through which the lead 4 passes. The slider 10 has no sharp parts and is made of plastics such as acetal which has a friction surface; preferably the slider is a TRIGLIDE, preferably a model in the PL 103 range. A sprung metal clip C1, C2 is connected to each D-ring D1, D2 of the lead 4. Each clip C1, C2 is split to provide an occluded opening which is dosed by the walls of the clip C1, C2 being resiliently urged into close proximity.

In use, the collar 2 is placed about the neck of a dog and the buckle 3 engaged with an appropriate eyelet-protected hole E1-E4 (the engagement being between the pin 3a and eyelet-protected hole E1 in Figure 2. The length of lead 4 between the loops L1, L2 is pulled to define a loose noose N and this is placed over the dog's muzzle or nose area to define a restraint which can prevent the dog from opening its mouth to bite or bark. The noose N is tightened by pulling on the ends of the lead 4 but without subjecting the dog to pain. The slider 10 lies beneath the chin of the animal and may contact its fur or skin during use. Because the slider 10 has no sharp parts the fur is not caught or torn. Because it is made of plastics material there is no risk of a skin reaction especially when the dog lowers its head. It will further be appreciated that the slider 10 provides friction surfaces which will not cause the lead to snag, catch or otherwise not run smoothly. A leash (not shown) is clipped to the two D rings, D1, D2. if the dog pulls on the leash, pressure is applied evenly to the muzzle of the dog, via the lead 4, giving control of the animal.

Dogs vary much in size and shape; if a collar 2 is too tight or too loose the device will not work satisfactorily. It is a preferred feature of this invention that the devices are produced in a range of sizes selected so that a good fit will always be available. It is a feature of the invention that each collar is provided with four eyelets E1, E2, E3, E4, and the innermost eyelet E4 of one collar size is the same distance from the buckle 3 as the outermost eyelet E1 of the next collar of shorter length. Such a method of dimensioning the collars ensures that there should always be one which fits a dog.

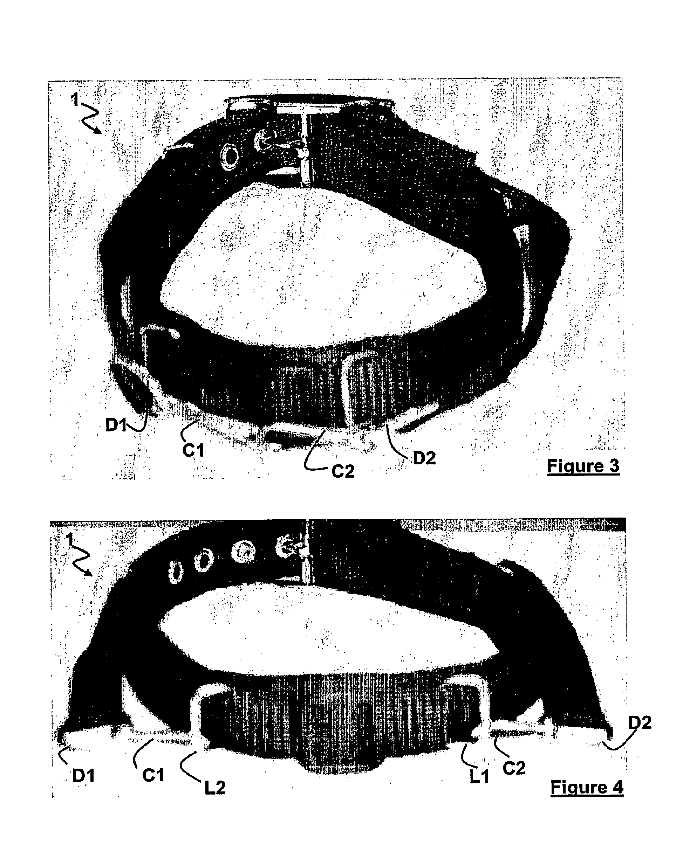

Referring to Figures 3 and 4, there is shown the device 1 of the invention configured as it would be when not in use to walk or restrain the animal. In Figure 3, the lead 4 is removed from the animal's muzzle and wrapped around the collar 2 so that the lead substantially encompasses the collar 2 twice, the D-rings D1, D2 being brought into close proximity and the clips C1, C2 being connected together. It will be appreciated that the pin 3a of the buckle 3 engages eyelet-protected hole E3. No parts of the device 1 hang from the collar 2, thereby ensuring that an animal to which the device 1 was secured could not choke subsequent to a hanging part becoming caught (or at least reducing the chance of such an incident occurring) or be snagged on an item. In Figure 4, again the lead 4 substantially encompasses the collar 2 twice but this time the clips C1, C2 are secured to loops L2 and L1 respectively. It will be appreciated that the pin 3a of buckle 3 engages eyelet-protected hole E1 of the collar 2. The lead 4, in this instance is about twice as long as the collar 2.

Of course, if the lead 4 were longer, it could extend further than twice around the collar 2 and it could extend less than twice around the collar 2 if it were substantially shorter. In which cases, the clips C1, C2 could be attached to loops L3 and/or L4.

The clips C1, C2 could be replaced with any suitable securing means. It is preferable that the securing means can attach to itself as well as to the collar 2. Fabric hook-and-eye fasteners (e.g. Velcro®) could be used. In which case the fabric could or would be sewn to the ends of the lead 4, inboard of rings D1 and D2. If it were intended to connect the Velcro® to the collar 2, only one part of the Velcro® need be sewn to each end, for example the hook part as it would adhere to the webbing sufficiently to stay in place. This would also have the advantage that the two ends of the lead 4 would not become secured together during walking or restraint of the animal.

It will be appreciated that once the animal has returned from a walk where it has been humanely restrained using the device 1, it is not necessary to remove the device 1 from the animal. The leash (not shown) is unclipped from the D-rings D1, D2, the noose N is removed from the animals muzzle and the lead 4 pulled through the loops L1 to L4. The lead 4 is then wrapped around the animal's neck and the clips C1, C2 are secured together or are secured to the loops L1 to L4 (as appropriate), leaving little or none of the lead 4 dangling to provide a choke or snag hazard for the animal or a trip hazard for any other animal or person.

Once the animal is ready to be walked again, the steps are reversed to provide a restraint device 1 which humanely restrains the animal.

The invention has been described in relation to dogs but the device is also applicable to other animals, large or small, domesticated or exotic. The collar and lead may be made in a variety of materials and the methods of holding them together may be varied.

## Claims

1. An animal restraint device (1) comprising a collar (2) arranged to be secured about an animal's neck and lead means (4) retained on the collar (2) and having a portion arranged to encompass the animal's muzzle, in use; said lead means (4) having two ends to which a leash is securable, **characterised in that** said lead means (4) comprises securing means (C1,C2) at or towards either end thereof for securing the ends of said lead means (4) together or to the collar (2) when not secured to a leash to leave little or none of said lead means (4) dangling from the collar (2).

2. A device as claimed in Claim 1, wherein a surface of the collar (2) includes longitudinally spaced apart lead guide means (L1-L4) mounted on either side of the longitudinal centre of the collar (2); the lead means (4) comprising a lead (4) which passes through said lead guide means (L1-L4) and includes stop means (D1, D2) at each end to which the leash is attachable; slider means (10) mounted on the lead (4), located between said guide means (L1, L2) and arranged to allow a portion of the lead (4) to assume a generally noose-like shape to encompass the nose and mouth region of the animal, wherein said securing means (C1, C2) are arranged to be secured or secureable together, or to a part of the device (1), once the leash has been removed from said stop means (D1, D2) to leave little or none of the lead (4) dangling from the collar (2).

3. A device (1) according to Claim 2, wherein said guide means (L1-L4) are arranged as two outer guide means (L3, L4) which are engagable with said stop means (D1, D2) and two inner guide means (L1, L2) which are located one on each side of the longitudinal centre of the collar (4).

4. A device (1) according to Claim 3, wherein said securing (C1, C2) are secureable to said inner guide means (L1, L2).

5. A device (1) according to any preceding Claim, wherein said securing means (C1, C2) are securable to one another.

6. A device (1) according to any preceding Claim, wherein said securing means (C1, C2) are securable to the collar (2).

7. A device (1) according to any preceding Claim, wherein the lead (4) is from about 2.5 to 1.5 times longer than the collar (2).

8. A device (1) according to any preceding Claim, wherein said securing means (C1, C2) comprise sprung clips, say sprung metal or plastics clips.

9. A device (1) according to any preceding Claim, wherein said securing means (C1, C2) comprise mutually engagable hook-and-eye fasteners.

10. A device (1) according to any preceding Claim, wherein said securing means (C1, C2) comprise fabric mutually engagable hook-and-eye fixings, secured (e.g. sewn) to the ends of the lead.

11. A device (1) according to any preceding Claim, wherein said securing means (C1, C2) are securable together underneath the animals' mouth and nose region.

12. A device (1) according to any one of Claims 1 to 11, comprising slider means (10) through which said lead means (4) extends to form the portion to encompass the animal's muzzle.

13. A device (1) according to Claim 12, wherein said slider means (10) comprises a pair of friction surfaces against which said lead means (4) bears and which friction surfaces allow the free, or at least substantially unimpeded, passage of said lead means (4).

14. A device (1) according to any one of Claims 12 or 13, wherein said slider means. (10) is made of a material which does not cause an allergic reaction in the animal to which the device is to be attached.

15. A device (1) as claimed in any preceding Claim, wherein all parts of the device (1) which, in use, are likely to contact the skin or fur of the animal are formed from material or materials which are not known, or, at least, are considered less likely, to cause allergic reactions to the animal.

## Patentansprüche

1. Tierrückhaltevorrichtung (1) mit einem Halsband (2), das zur Befestigung um einen Nacken eines Tieres angeordnet ist, sowie einem Führungsmittel (4), das an dem Halsband (2) gehalten ist und einen Abschnitt aufweist, der angeordnet ist, um im Gebrauch das Maul des Tieres zu umgreifen, wobei das Führungsmittel (4) zwei Enden aufweist, an denen eine Leine befestigt werden kann, **dadurch gekennzeichnet, dass** das Führungsmittel (4) ein Befestigungsmittel (C1, 2) an oder in Richtung beider Enden davon aufweist, um die Enden des Führungsmittels (4) aneinander oder an dem Halsband (2) zu befestigen, wenn sie nicht an einer Leine befestigt sind, um wenig oder gar nichts von dem Führungsmittel (4) von dem Halsband (2) baumeln zu lassen.

2. Vorrichtung wie in Anspruch 1 beansprucht, wobei eine Oberfläche des Halsbandes (2) in Längsrichtung beabstandete Richtführungsmittel (L1-L4) enthält, die auf beiden Seiten der Längsmitte des Halsbandes (2) befestigt sind, wobei das Führungsmittel (4) eine Führung (4) aufweist, welche durch die Richtführungsmittel (L1-L4) hindurchgeht und Anschlagmittel (D1, D2) an jedem Ende enthält, an denen die Leine befestigt werden kann; ein an der Führung (4) befestigtes Verschiebemittel (10), das zwischen den Führungsmitteln (L1, L2) angeordnet ist und angeordnet ist, um einem Teil der Führung (4) zu erlauben, eine im Wesentlichen schlingenförmige Form anzunehmen, um den Nasen- und Maulbereich des Tiers zu umgreifen, wobei die Befestigungsmittel (C1, C2) angeordnet sind, um aneinander oder an einem Teil der Vorrichtung (1) befestigt zu werden oder befestigt werden zu können, sobald die Leine von den Anschlagmitteln (D1, D2) entfernt worden ist, um wenig oder gar nichts von der Führung (4) von dem Halsband (2) baumeln zu lassen.

3. Vorrichtung (1) gemäß Anspruch 2, wobei die Führungsmittel (L1-L4) als zwei äußere Führungsmittel (L3, L4) angeordnet sind, die in die Anschlagmittel (D1, D2) eingreifen können und als zwei innere Führungsmittel (L1, L2), von denen eines auf jeder Seite der Längsmitte des Halsbandes (4) angeordnet ist.

4. Vorrichtung (1) gemäß Anspruch 3, wobei die Befestigung (D1, C2) an den inneren Führungsmitteln (L1, L2) befestigt werden kann.

5. Vorrichtung (1) gemäß einem vorangehenden Anspruch, wobei die Befestigungsmittel (C1, C2) aneinander befestigt werden können.

6. Vorrichtung (1) gemäß einem vorangehenden Anspruch, wobei die Befestigungsmittel (C1, C2) an dem Halsband (2) befestigt werden können.

7. Vorrichtung (1) gemäß einem vorangehenden Anspruch, wobei die Führung (4) zwischen 2,5 und 1,5 Mal länger ist als das Halsband (2).

8. Vorrichtung (1) gemäß einem vorangehenden Anspruch, wobei die Befestigungsmittel (C1, C2) federnde Clips aufweisen, beispielsweise, federnde Metall- oder Kunststoff-Clips.

9. Vorrichtung (1) gemäß einem vorangehenden Anspruch, wobei die Befestigungsmittel (C1, C2) Haken- und Ösen-Verschlüsse aufweist, die wechselseitig ineinander greifen können.

10. Vorrichtung (1) gemäß einem vorangehenden Anspruch, wobei die Befestigungsmittel (C1, C2) Haken- und Ösen-Befestigungen aus Gewebe aufweisen, die wechselseitig ineinander eingreifen können, und an den Enden der Führung befestigt (z.B. genäht) sind.

11. Vorrichtung (1) gemäß einem vorangehenden Anspruch, wobei die Befestigungsmittel (C1, C2) unterhalb des Maul- und Nasenbereichs des Tieres aneinander befestigt werden können.

12. Vorrichtung (1) gemäß einem der Ansprüche 1 bis 11, umfassend ein Verschiebemittel (10), durch das sich das Führungsmittel (4) erstreckt, um den Abschnitt zum Umgreifen des Mauls des Tieres zu bilden.

13. Vorrichtung (1) gemäß Anspruch 12, wobei das Verschiebemittel (10) ein Paar Reibungsflächen aufweist, auf denen das Führungsmittel (4) lastet und wobei diese Reibungsflächen die freie oder zumindest im Wesentlichen ungehinderte Durchführung des Führungsmittels (4) erlauben.

14. Vorrichtung (1) gemäß einem der Ansprüche 12 oder 13, wobei das Verschiebemittel (10) aus einem Material hergestellt ist, das keine allergische Reaktion in dem Tier verursacht, an dem die Vorrichtung befestigt ist.

15. Vorrichtung (1) wie in einem vorangehenden Anspruch beansprucht, wobei alle Teile der Vorrichtung (1), die im Gebrauch wahrscheinlich die Haut oder das Fell des Tieres berühren, aus einem Material oder Materialien gebildet sind, von dem nicht bekannt ist oder von dem es zumindest für weniger wahrscheinlich gehalten wird, dass es allergische Reaktionen an dem Tier verursacht.

## Revendications

1. Dispositif de retenue pour animal (1) comprenant un collier (2) adapté pour être fixé autour du cou d'un animal et un moyen de laisse (4) retenu sur le collier (2) et ayant une partie prévue pour entourer le museau de l'animal, lors de l'utilisation ; ledit moyen de laisse (4) ayant deux extrémités auxquelles peut être fixée une laisse, **caractérisé en ce que** ledit moyen de laisse (4) comprend des moyens de fixation (C1, C2) au niveau ou en direction d'une quelconque de ses extrémités pour fixer les extrémités dudit moyen de laisse (4) ensemble ou au collier (2) lorsqu'elles ne sont pas fixées à une laisse pour laisser peu ou pas pendiller ledit moyen de laisse (4) du collier (2).

2. Dispositif selon la revendication 1, dans lequel une surface du collier (2) comprend des moyens de guidage de laisse (L1-L4) espacés longitudinalement, montés de n'importe quel côté du centre longitudinal du collier (2) ; le moyen de laisse (4) comprenant une laisse (4) qui passe à travers lesdits moyens de guidage de laisse (L1-L4) et comprend des moyens d'arrêt (D1, D2) au niveau de chaque extrémité à laquelle la laisse peut être attachée ; un moyen coulissant (10) monté sur la laisse (4), situé entre lesdits moyens de guidage .(L1, L2) et adapté pour permettre à une partie de la laisse (4) d'adopter une forme généralement semblable à un noeud coulant pour entourer la région nasale et buccale de l'animal, dans lequel lesdits moyens de fixation (C1, C2) sont adaptés pour être fixés ou pouvoir être fixés ensemble ou à une partie du dispositif (1), lorsque la laisse a été retirée desdits moyens d'arrêt (D1, D2) pour laisser peu ou pas pendiller la laisse (4) du collier (2).

3. Dispositif (1) selon la revendication 2, dans lequel lesdits moyens de guidage (L1-L4) sont agencés comme deux moyens de guidage extérieurs (L3, L4) qui peuvent être engagés avec lesdits moyens d'arrêt (D1, D2) et deux moyens de guidage intérieurs (L1, L2) qui sont chacun situés de chaque côté du centre longitudinal du collier (4).

4. Dispositif (1) selon la revendication 3, dans lequel lesdits moyens de fixation (C1, C2) peuvent être fixés aux dits moyens de guidage intérieurs (L1, L2).

5. Dispositif (1) selon l'une quelconque des revendications précédentes, dans lequel lesdits moyens de fixation (C1, C2) peuvent être fixés l'un à l'autre.

6. Dispositif (1) selon l'une quelconque des revendications précédentes, dans lequel lesdits moyens de fixation (C1, C2) peuvent être fixés au collier (2).

7. Dispositif (1) selon l'une quelconque des revendications précédentes, dans lequel la laisse (4) est environ 2,5 à 1,5 fois plus longue que le collier (2).

8. Dispositif (1) selon l'une quelconque des revendications précédentes, dans lequel lesdits moyens de fixation (C1, C2) comprennent des mousquetons, tels des mousquetons en métal ou en plastique.

9. Dispositif (1) selon l'une quelconque des revendications précédentes, dans lequel lesdits moyens de fixation (C1, C2) comprennent des agrafes à engagement réciproque.

10. Dispositif (1) selon l'une quelconque des revendications précédentes, dans lequel lesdits moyens de fixation (C1, C2) comprennent des agrafes à engagement réciproque en tissu, fixées (par exemple cousues) aux extrémités de la laisse.

11. Dispositif (1) selon l'une quelconque des revendications précédentes, dans lequel lesdits moyens de fixation (C1, C2) peuvent être fixés ensemble sous la région buccale ou nasale des animaux.

12. Dispositif (1) selon l'une quelconque des revendications 1 à 11, comprenant des moyens coulissants (10) à travers lesquels ledit moyen de laisse (4) s'étend pour former la partie servant à entourer le museau de l'animal.

13. Dispositif (1) selon la revendication 12, dans lequel ledit moyen coulissant (10) comprend une paire de surfaces de friction contre lesquelles s'appuie ledit moyen de laisse (4) et lesquelles surfaces de friction permettent le passage libre, ou du moins essentiellement non entravé dudit moyen de laisse (4).

14. Dispositif (1) selon l'une quelconque des revendications 12 ou 13, dans lequel ledit moyen coulissant (10) est en un matériau qui ne provoque pas de réaction allergique chez l'animal auquel le dispositif doit être attaché.

15. Dispositif (1) selon l'une quelconque des revendications précédentes, dans lequel toutes les pièces du dispositif (1) qui, lors de l'utilisation, risquent de toucher la peau ou le pelage de l'animal sont en un matériau ou en matériaux qui ne sont pas connus ou du moins considérés comme moins susceptibles de provoquer des réactions allergiques chez l'animal.
